**Europäisches Patentamt**

(19) **European Patent Office**

**Office européen des brevets**

(11) Veröffentlichungsnummer: **0 011 240**
**B1**

(12) # EUROPÄISCHE PATENTSCHRIFT

(45) Veröffentlichungstag der Patentschrift:
**21.09.83**

(51) Int. Cl.³: **B 29 B 1/04,** C 08 J 3/20,
C 08 L 23/02, C 08 K 7/02

(21) Anmeldenummer: **79104387.0**

(22) Anmeldetag: **08.11.79**

(54) Verfahren zur Herstellung kleinteiliger, mit faserförmigen Additiven versehener Polyolefin-Formmassen und deren Verwendung zur Herstellung von Formkörpern.

(30) Priorität: **18.11.78 DE 2850155**

(43) Veröffentlichungstag der Anmeldung:
**28.05.80 Patentblatt 80/11**

(45) Bekanntmachung des Hinweises auf die Patenterteilung:
**21.09.83 Patentblatt 83/38**

(84) Benannte Vertragsstaaten:
**AT BE DE FR GB IT NL**

(56) Entgegenhaltungen:
**DE-B-1 280 546**
**FR-A-1 451 293**
**FR-A-2 072 218**
**FR-A-2 310 851**
**GB-A-1 331 310**
**GB-A-1 447 304**
**US-A-4 045 403**

(73) Patentinhaber: **BASF Aktiengesellschaft,**
**Carl-Bosch-Strasse 38, D-6700 Ludwigshafen (DE)**

(72) Erfinder: **Theysohn, Rainer, Dr. Dipl.-Chem., Bruesseler**
**Ring 38, D-6700 Ludwigshafen (DE)**
Erfinder: **Zeitler, Gerhard, Dr. Dipl.-Chem.,**
**Lessingstrasse 11, D-6711 Hessheim (DE)**
Erfinder: **Pfirrmann, Guenther, Dr. Dipl.-Chem., Osloer**
**Weg 38, D-6700 Ludwigshafen (DE)**
Erfinder: **Seiler, Erhard, Dr. Dipl.-Chem., Erpolzheimer**
**Strasse 1, D-6700 Ludwigshafen (DE)**

Verfahren zur Herstellung kleinteiliger, mit faserförmigen Additiven versehener Polyolefin-Formmassen und deren Verwendung zur Herstellung von Formkörpern

Die Erfindung betrifft ein Verfahren zur Herstellung kleinteiliger, mit faserförmigen Additiven versehener Polyolefin-Formmassen. Diese sind aufgebaut aus (a) 100 Gew.-Teilen eines kleinteiligen, teilkristallinen Polyolefins, das einen mittleren Teilchendurchmesser im Bereich von 10 bis 5000 µm hat und eine Grenzviskosität [η], gemessen in Decalin bei 130°C, im Bereich von 0,5 bis 15 aufweist, (b) 2 bis 150 Gew.-Teilen eines faserförmigen Additivs, das einen mittleren Teilchendurchmesser von 0,001 bis 200 µm hat, eine mittlere Faserlänge von 5 bis 2000 µm aufweist und eine Erweichungstemperatur besitzt, die mindestens 50°C über dem Kristallitschmelzpunkt des Polyolefins liegt, (c) gegebenenfalls 0 bis 5 Gew.-Teilen eines üblichen Haftvermittlers auf Silan- oder Titanat-Basis sowie (d) – gegebenenfalls – übliche Mengen üblicher anderer Zusatzstoffe bzw. Hilfsstoffe.

Bei derartigen ungeformten Polyolefin-Formmassen, die mit faserförmigen Additiven versehen sind, handelt es sich um Massen, die in üblichen Verfahren, wie z.B. Spritzguss oder Extrusion zu geformten Polyolefin-Formkörpern, die mit dem Additiv gefüllt sind, verarbeitet werden können.

Die Ausrüstung von Polyolefinmassen mit faserförmigen Additiven, wie z.B. mit anorganischen Füllstoffen mit faserförmiger Struktur ist ein bewährtes Verfahren zur Erzielung günstiger Produkteigenschaften, wie grössere Zug- und Biegefestigkeit, bessere Dimensionsstabilität, geringerer Wärmeausdehnungskoeffizient oder höhere Steifigkeit.

Die Einbringung geeigneter faserförmiger Additive in Polyolefine geschieht in der Praxis so, dass das Polymere zunächst, z.B. auf Extrudern aufgeschmolzen wird und der faserförmige Füllstoff dann in die Schmelze zudosiert wird. Nachteile dieses Verfahrens sind einmal der hohe Energieaufwand, der zum Aufschmelzen des Polyolefins und zum Schmelzmischen mit dem Additiv notwendig ist, zum anderen der erhebliche technische Aufwand, der bei der exakten Dosierung und kontinuierlichen Förderung der oftmals zum Blokken oder zur Brückenbildung neigenden faserförmigen Füllstoffe getrieben werden muss. Daneben tritt, vor allem bei anorganischen faserförmigen Füllstoffen, ein nicht unerheblicher Verschleiss im Bereich der Einzugszonen der Verarbeitungsmaschinen auf.

Nicht geeignet ist dieses Verfahren z.B. bei den aus Kostengründen interessanten faserförmigen Additiven auf Mineral-, Basalt- oder Schlackenbasis, da solche – meist für Isolierzwecke angebotenen Produkte – nur als nicht dosierfähige Watte oder in watteähnlicher Form zur Verfügung stehen. Weiterhin ist das o.g. übliche Einarbeitungsverfahren nicht zweckmässig bei solchen Polyolefinen, die wegen ihres hohen Molekulargewichtes oder wegen partieller Vernetzung durch die bei der Einarbeitung zwangsläufig auftretenden hohen Scherkräfte irreversibel geschädigt werden.

Aus der GB-PS 1447304 ist ein Verfahren zum Herstellen von mit globulären oder blättchenförmigen Additiven versehenen Polyolefingranulaten bekannt, bei dem Polyolefinteilchen mit einer durchschnittlichen Partikelgrösse von beispielsweise 150 µm mit globulären oder blättchenförmigen Additiven vermischt werden, wobei 10 bis 80 Gewichtsprozent des Additivs angewendet werden. Die Vermischung selbst erfolgt in zwei Stufen, wobei in der ersten Stufe gemäss Beispiel 2 im Falle von Niederdruckpolyäthylenpulver auf ca. 130°C bei hoher Mischintensität erhitzt und anschliessend in einer zweiten Stufe bei halber Mischintensität die Temperatur auf 140°C eingestellt wird. Anschliessend wird die Mischung in einen gekühlten Mischer geschüttet und unter Rühren abgekühlt. Bei diesem bekannten Verfahren wird ein Endprodukt erhalten, das einen erheblich höheren Partikeldurchmesser aufweist als das Ausgangsprodukt, nämlich 500 µm bis 20 mm.

Das bekannte Verfahren weist den Nachteil auf, dass die Partikelchen während der Beladung mit Füllstoffen stark anwachsen und agglomerieren, so dass die Weiterverarbeitung des Ausgangs- und des Endproduktes nicht auf gleichen Maschinen bei vergleichbaren Einzugsverhalten und vergleichbaren Zykluszeiten erfolgen kann. Ein weiterer Nachteil des bekannten Verfahrens besteht darin, dass die Beladung der Polymerpartikelchen nur mit Füllstoffen vorgenommen wurde, die zwar wegen ihrer globulären bzw. blättchenförmigen Strukturen einen schnellen und vollständigen Bedeckungsgrad des einzelnen Polymerpartikels bewirken aber trotzdem die Agglomeration der Teilchen nicht verhindern können.

Der Erfindung zugrundeliegende Aufgabe war es, ein kostengünstiges, apparativ einfaches und exaktes Verfahren zum Einbringen von faserförmigen Materialien in kleinteilige Polyolefinformmassen zu entwickeln, das die Nachteile des aus der GB-PS 1447304 bekannten Verfahrens vermeidet und trotz Einsatzes nichtglobulärer bzw. nicht blättchenförmiger Additive zu kleinteiligen gefüllten Formmassen führt, die in der Korngrössenverteilung dem eingesetzten feinteiligen Polymeren entsprechen.

Die Aufgabe wurde erfindungsgemäss dadurch gelöst, dass man die Komponenten (a) – kleinteiliges, teilkristallines Polyolefin – faserförmiges Material – und gegebenenfalls (c) – Haftvermittler sowie gegebenenfalls (d) – andere Zusatz- und Hilfsstoffe – in einer ersten Arbeitsstufe (I) in einem Mischer – gegebenenfalls unter Zu- oder Abfuhr kalorischer Wärme – mischt, wobei man sie in einer ersten Unterstufe (I.1) bei einer Mischintensität im Bereich von 100 bis 600 Watt pro ein Liter (W/1) Nutzinhalt innerhalb einer Zeitspanne von 2 bis 30 Minuten von Umgebungstemperatur – die unterhalb der Kristallitschmelztemperatur des Polyolefins (a) liegt und insbesondere Raumtemperatur ist – auf die Kristallitschmelztemperatur des Polyolefins (a) bringt, unmittelbar darauf im Verlauf einer zweiten Unterstufe (I.2) auf eine Mischintensität übergeht, die 0,3 bis 0,8 mal so gross ist, wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40°C darüber liegende Temperatur bringt und unmittelbar hiernach in einer zweiten Arbeitsstufe (II) innerhalb einer Zeitspanne von 0,5 bis 30 Sekunden aus dem Mischer austrägt und innerhalb von 120 Sekunden auf eine Temperatur unterhalb der Kristallitschmelztemperatur des Polyolefins (a) bringt.

Unter kleinteiligen, kristallinen Polyolefinen (a) werden solche verstanden, die einen Teilchendurchmesser im Bereich von 10 bis 5000, vorzugsweise 100 bis 2000 µm aufweisen und deren Grenzviskosität [η] (gemessen nach DIN 53728 in Decalin bei 130°C) im Bereich von 0,5 bis 15, vorzugsweise 1 bis 10, liegt. Bei den Polyolefinen handelt es sich vorzugsweise um Polyäthylen hoher Dichte (0.93 bis 0.97 g/cm³), und um Polypropylen, insbesondere um ein solches, das nach dem Verfahren, wie z.B. in der DE-AS 1217071 beschrieben, hergestellt wurde, Copolymere von Äthylen und Propylen, sofern sie noch kristalline Anteile enthalten, sowie um entsprechende Polymere, die bis zu 5 Gew.-% Acrylsäure aufgepropft enthalten. Teilkristalline Polyolefine sind solche, bei denen bei der DSC-Analyse zumindest ein scharfer Schmelzpeak auftritt.

Die faserförmigen Additive (b) sollen einen mittleren Teilchendurchmesser aufweisen von 0,001 bis 200 µm, vorzugsweise 0,01 bis 50 µm und die mittlere Faserlänge soll 5 bis 2000 µm sein. Zudem sollen sie einen Schmelz- bzw. Erweichungsbereich besitzen, der mindestens 50°C über dem Kristallitschmelzpunkt des Polyolefins liegt. In Frage kommen z.B. Glasfasern aus A-, E- oder C-Glas, Mineralfasern, Schlackenwolle, Asbestfasern, Kohlenstoffasern, K-Titanatfasern, Holzfasern, Cellulosefasern.

Als Haftvermittler (c) kommen die üblichen Silan- und Titanatverbindungen in Betracht, wie sie z.B. von den Firmen Union Carbide Corp. oder Kenrich Petrochemicals Inc. vertrieben werden.

Als Hilfs- und Zusatzstoffe (d) kommen in Frage: Anorganische und organische Farbpigmente, Stabilisatoren, Verarbeitungshilfsmittel, wie Gleit- und Entformungsmittel, Verträglichkeitsvermittler und Treibmittel.

Die Herstellung der Formmassen kann erfolgen in einem Mischer, in dem die Mischflügel senkrecht zur Mischerachse angeordnet sind, wie er z.B. in der DE-AS 1054073 oder DE-AS 1454768 beschrieben ist. Derartige Mischer wurden bisher hautpsächlich zur Aufbereitung von nichtkristallinen Thermoplasten mit breitem Erweichungsbereich, wie PVC oder auch ABS eingesetzt. Sie sind aber auch zum Agglomerieren von schlecht fliessfähigen, feinteiligen Polyolefinen mit breiter Kornverteilung geeignet, wobei ein verengtes gröberes Kornspektrum und ein höheres Schüttgewicht resultiert, so dass auf diese Weise das Verarbeitungsverhalten verbessert werden kann. Es ist zudem bekannt, dass das Agglomerieren von Kunststoffpartikeln auch in Gegenwart von Zuschlagstoffen geschehen kann. Der Beschreibung der DE-OS 2302370 ist zu entnehmen, dass bei der Aufarbeitung von Polyolefinpulvern in schnellaufenden Mischern, die maximale Temperatur 2 bis 13°C unterhalb des Schmelzbereiches des Polyolefins liegen sollte, um ein Verkleben bzw. Verklumpen zu vermeiden.

Überraschend wurde nun gefunden, dass es nach dem erfindungsgemässen Verfahren möglich ist, im Temperaturbereich oberhalb des Kristallitschmelzpunktes des betreffenden Polyolefins zu arbeiten, ohne dass bei der vollständigen Bindung faserförmiger Materialien an die Polyolefinkomponente eine nennenswerte Agglomeration oder sogar Klumpenbildung stattfindet. Es resultieren hierbei feinteilige Formmassen mit ähnlicher Kornverteilung wie das eingesetzte Polymere, die Additive (b) gebunden enthalten und die sich leicht zu Formkörpern weiterverarbeiten lassen.

Weiterhin war es überraschend, dass es mit dem gefundenen Verfahren möglich ist, auch aus Handhabungs- und Dosiergründen für die Thermoplastverarbeitung praktisch nicht einsetzbare Endlos-Fasern auf Basis Mineralwolle/Steinwolle/Schlackenwolle zu zerkleinern, homogen zu verteilen und an das Polymere zu binden. In der Regel mussten diese faserförmigen Materialien vor der Bindung an die Polymerpartikeln in einem separaten Arbeitsverfahren zerkleinert werden.

Die erfindungsgemässe Arbeitsweise besteht vorzugsweise darin, dass man in einer ersten Stufe (I.1) das Gemisch aus (a) und (b) und gegebenenfalls (c) und/oder (d) mit einer Mischintensität von 200 bis 400 W pro Liter Nutzinhalt innerhalb von 5 bis 20 Minuten von Umgebungstemperatur, die üblicherweise Raumtemperatur ist, auf die Kristallitschmelztemperatur des Polyolefins bringt, anschliessend im Verlauf einer zweiten Stufe (I.2) auf eine Mischintensität übergeht, die 0,4 bis 0,7 mal so gross ist, wie die Mischintensität bei (I.1) und innerhalb einer Zeitspanne von 0,2 bis 10 Minuten, von der Kristallitschmelztemperatur des Polyolefins auf eine 5 bis 30°C darüber liegende Temperatur bringt.

Anschliessend wird in einer zweiten Arbeitsstufe (II) das Produkt innerhalb von vorzugsweise 0,5 bis 10 Sekunden aus dem Mischer ausgetragen und auf eine Temperatur unterhalb der Kristallitschmelztemperatur des Polyolefins abgekühlt.

Eine Ausführungsvariante besteht darin, dass man im Verlauf der zweiten Unterstufe (I.2) noch feinteilige Füllstoffe, wie calz. Kaolin mit einer mittleren Korngrösse von 0,5 µm oder Talkum mit einer mittleren Blättchendicke von 1 µm zugibt, wobei die Menge der feinteiligen Füllstoffe nicht grösser sein soll als 30 Gew.-% des eingesetzten faserförmigen Additivs.

Unter Mischintensität von 100 bis 600 W/1 Nutzinhalt wird verstanden die Energieaufnahme (in Watt) bezogen auf ein Liter Volumen, das die Komponenten (a), faserförmiges Material und ggf. (c) und/oder (d) im Mischer einnehmen.

Das beschriebene Verfahren ist apparativ und energetisch weit weniger aufwendig, als z.B. eine Extruderkonfektionierung. Es erlaubt zudem eine einfache und exakte Einbringung der Komponenten, Additive und Zuschläge ohne komplizierte Dosiertechnik. Darüber hinaus hat das Verfahren den Vorteil, dass es möglich ist, Füllstoffe in ansonsten schwer verarbeitbare Thermoplaste, wie ultrahochmolekulares Polyäthylen, ohne Schädigung der Polymeren einzubringen. Ein weiterer Vorteil ist die problemlose Verwendung von preiswerten Isolierglasfasern in Form von Endlosmatten oder in watteähnlicher Form.

Die kleinteiligen, mit faserförmigen Additiven versehenen Polyolefin-Formmassen können verwendet werden zur Herstellung von Formkörpern nach den üblichen Spritzguss-, Extrusions- oder Hohlkörperblasverfahren.

Die folgenden Beispiele verdeutlichen das oben genannte Verfahren:

Beispiel 1

Ausgangsmaterial ist ein Gemisch aus (a) 25 kg (entsprechend 100 Gewichtsteilen) eines kleinteiligen Polyäthylens, das einen Teilchendurchmesser im Bereich von 250 bis 2000 µm und einen mittleren Teilchendurchmesser von 800 µm hat, und eine Grenzviskosität [η] von 4,8 aufweist, und (b) 4,41 kg (entsprechend 17,6 Gewichtsteilen) Schnittglasfasern aus E-Glas, die mit einem Haftvermittler und einer Glasfaserschlichte ausgerüstet sind und die einen Teilchendurchmesser von 14 µm und eine mittlere Länge von 6 mm im Anlieferungszustand aufweisen. Das vorgenannte Gemisch wird (I.) in einer ersten Arbeitsstufe in einem Fluidmischer von 100 l Nutzinhalt – ohne Zu- oder Abfuhr kalorischer Wärme –, (I.1) in einer ersten Unterstufe bei einer Mischintensität von 350 W pro 1 Liter Nutzinhalt innerhalb einer Zeitspanne von 5 Minuten von Umgebungstemperatur (= Raumtemperatur) auf die Kristallitschmelztemperatur des Polyäthylens (a) (= ~ 138°C) gebracht; unmittelbar darauf (I.2) im Verlauf einer zweiten Unterstufe bei einer Mischintensität, die im Mittel 0,52 mal so gross ist, wie die Mischintensität in der ersten Unterstufe (I.1), innerhalb einer Zeitspanne von 3 Minuten von der Kristallitschmelztemperatur des Polyäthylens (a) auf eine 12°C darüber liegende Temperatur (= 150°C) gebracht; und unmittelbar hiernach (II) in einer zweiten Arbeitsstufe innerhalb einer Zeitspanne von 5 Sekunden aus dem Fluidmischer ausgetragen und innerhalb von 30 Sekunden auf eine Temperatur (= 75°C) unterhalb der Kristallitschmelztemperatur des Polyäthylens (a) gebracht.

Das erhaltene feinteilige Produkt weist praktisch die gleiche Kornverteilung auf wie das vorgelegte Polymerpulver, die mittlere Glasfaserlänge liegt bei 0,21 mm, wobei 90–95 Gew.-% der eingesetzten Glasfasern fest an das Polymere gebunden sind.

Beispiel 2

Ausgangsmaterial ist ein Gemisch aus (a) 20 kg (entsprechend 100 Gewichtsteilen) eines kleinteiligen Polypropylens, das einen Teilchendurchmesser im Bereich von 25 bis 1000 µm und einen mittleren Teilchendurchmesser von 400 µm hat und eine Grenzviskosität [η] von 2,7 aufweist, und (b) 5,0 kg (entsprechend 25 Gewichtsteilen) Mineralfasern in Form einer in Streifen geschnittenen Steinwollmatte, wobei die endlosen Einzelfasern einen Durchmesser zwischen 10 und 25 µm aufweisen und (c) 0,05 kg (entsprechend 0,25 Gewichtsteilen) γ-Aminopropyltriäthoxy-silan (d) 0,1 kg (entsprechend 0,5 Gewichtsteilen) Stabilisator Irganox PS 802 (der Fa. Ciba-Geigy, Basel).

Das vorgenannte Gemisch wird (I.) in einer ersten Arbeitsstufe in einem Fluidmischer von 100 l Nutzinhalt – ohne Zu- oder Abfuhr kalorischer Wärme – (I.1) in einer ersten Unterstufe bei einer Mischintensität von im Mittel 320 W pro 1 Liter Nutzinhalt innerhalb einer Zeitspanne von 4,6 Minuten von Umgebungstemperatur (= Raumtemperatur) auf die Kristallitschmelztemperatur des Polypropylens (a) (= ~ 160°C) gebracht, unmittelbar hierauf (I.2) im Verlauf einer zweiten Unterstufe bei einer Mischintensität, die im Mittel 0,47 mal so gross ist, wie die Mischintensität in der ersten Unterstufe (I.1), innerhalb einer Zeitspanne von 3,2 Minuten von der Kristallitschmelztemperatur des Polypropylens (a) auf eine 10°C darüber liegende Temperatur (= 170°C) gebracht; und unmittelbar hiernach in einer zweiten Arbeitsstufe (II.) innerhalb einer Zeitspanne von 5 Sekunden aus dem Fluidmischer ausgetragen und innerhalb von 50 Sekunden auf eine Temperatur (80°C) unterhalb des Kristallitschmelzpunktes des Polypropylens (a) gebracht.

Das Produkt enthält die eingesetzten Mineralfasern vollständig aufgeschlossen, auf eine mittlere Länge von 0,17 mm zerkleinert und zu 98% bezogen auf die eingesetzte Fasermenge, vollständig gebunden.

Beispiel 3

Ausgangsmaterial ist ein Gemisch aus (a) 20 kg (entsprechend 100 Gewichtsteilen) eines kleinteiligen acrylsäuregepfropften Polypropylens mit einer Säurezahl von 30 (siehe DE-OS 2658810), das ein Teilchendurchmesser im Bereich von 50 bis 1500 und einen mittleren Teilchendurchmesser von 500 µm hat und eine Grenzviskosität [η] von 4 (MI = 0,1, 2,16 kg, 230°C) aufweist, und (b) 5,0 kg (entsprechend 25 Gewichtsteilen) Schnittglasfasern aus E-Glas, die mit einem Haftvermittler und einer Glasfaserschlichte ausgerüstet sind, die einen max. Faserdurchmesser von 14 µm haben und im Anfangszustand eine mittlere Länge von 3 mm aufweisen. Das vorgenannte Gemisch wird (I) in einer ersten Arbeitsstufe in einem Fluidmischer von 100 l Nutzinhalt – ohne Zu- oder Abfuhr kalorischer Wärme –, (I.1) in einer ersten Unterstufe bei einer Mischintensität von 345 W pro 1 Liter Nutzinhalt innerhalb einer Zeitspanne von 5,2 Minuten von Umgebungstemperatur (= Raumtemperatur) auf die Kristallitschmelztemperatur des gepfropften Polypropylens (a) (= ~ 160°C) gebracht; unmittelbar darauf (I.2) im Verlauf einer zweiten Unterstufe bei einer Mischintensität der ersten Unterstufe (I.1), innerhalb einer Zeitspanne von 5 Minuten von der Kristallitschmelztemperatur des modifizierten Polypropylens (a) auf eine 14°C darüber liegende Temperatur (= 174°C) gebracht; und unmittelbar hiernach (II.) in einer zweiten Arbeitsstufe innerhalb einer Zeitspanne von 5 Sekunden aus dem Fluidmischer ausgetragen und innerhalb von 50 Sekunden auf eine Temperatur (= 80°C) unterhalb des Kristallitschmelzpunktes von Polypropylen (a) gebracht.

Das feinteilige Produkt hat eine Korngrössenverteilung, die etwas feiner als die des polymeren Ausgangsproduktes ist. Die praktisch vollständig gebundenen Fasern weisen eine mittlere Länge von 0,15mm auf.

### Beispiel 4

Ausgangsmaterial ist ein Gemisch aus (a) 16kg (entsprechend 100 Gewichtsteilen) eines kleinteiligen Polypropylens, das einen Teilchendurchmesser im Bereich von 25 bis 1000µm und einen mittleren Teilchendurchmesser von 400µm hat und eine Grenzviskosität [η] von 2,7 aufweist, und (b) 4kg (entsprechend 25 Gewichtsteilen) Holzfasern aus Fichte/Tannenholz von einer Faserlänge zwischen 30 und 200µm und einer Faserdicke im Bereich von 1 bis 20µm, wobei das mittlere 1/d-Verhältnis 8:1 beträgt. Das vorgenannte Gemisch wird (I.) in einer ersten Arbeitsstufe in einem Fluidmischer von 100l Nutzinhalt – ohne Zu- und Abfuhr kalorischer Wärme –, (I.1) in einer ersten Unterstufe bei einer Mischintensität von 200W pro 1 Liter Nutzinhalt innerhalb einer Zeitspanne von 7,5 Minuten von Umgebungstemperatur (= Raumtemperatur) auf die Kristallitschmelztemperatur des Polypropylens (a) (= 160°C) gebracht; unmittelbar darauf (I.2) im Verlauf einer zweiten Unterstufe bei einer Mischintensität, die im Mittel 0,52 mal so gross ist, wie die Mischintensität in der ersten Unterstufe (I.1), innerhalb einer Zeitspanne von 1,5 Minuten von der Kristallitschmelztemperatur des Polypropylens (a) auf eine 14°C darüber liegende Temperatur (= 174°C) gebracht; und unmittelbar hiernach (II.) in einer zweiten Arbeitsstufe innerhalb einer Zeitspanne von 5 Sekunden aus dem Fluidmischer ausgetragen und innerhalb von 45 Sekunden auf eine Temperatur (= 75°C) unterhalb des Kristallitschmelzpunktes von Polypropylen (a) gebracht.

Das feinteilige Produkt ist freifliessend, enthält 90% des eingesetzten Füllstoffs fest gebunden und ist praktisch geruchsneutral.

### Patentansprüche

1. Verfahren zum Herstellen kleinteiliger, mit faserförmigen Additiven versehener Polyolefin-Formmassen, die aufgebaut sind aus

a) 100 Gew.-Teilen eines kleinteiligen, teilkristallinen Polyolefins, das einen mittleren Teilchendurchmesser im Bereich von 10 bis 5000µm hat und eine Grenzviskosität [η], gemessen in Decalin bei 130°C, im Bereich von 0,5 bis 15 aufweist,

b) 2 bis 150 Gew.-Teilen eines faserförmigen Additivs, das einen mittleren Teilchendurchmesser von 0,001 bis 200µm hat, eine mittlere Faserlänge von 5 bis 2000µm aufweist und eine Erweichungstemperatur besitzt, die mindestens 50°C über dem Kristallitschmelzpunkt des Polyolefins liegt sowie

c) – gegebenenfalls – 0 bis 5 Gew.-Teilen eines üblichen Haftvermittlers auf Silan- oder Titan-Basis sowie

d) – gegebenenfalls – üblichen Mengen üblicher anderer Zusatz- bzw. Hilfsstoffe,

dadurch gekennzeichnet, dass man die Komponente (a) und faserförmiges Material sowie – gegebenenfalls – die Komponenten (c) und/oder (d) in einer ersten Arbeitsstufe (I) in einem Mischer – gegebenenfalls unter Zu- oder Abfuhr kalorischer Wärme – mischt, wobei man sie in einer ersten Unterstufe (I.1) bei einer Mischintensität im Bereich von 100 bis 600 Watt pro ein Liter Nutzinhalt innerhalb einer Zeitspanne von 2 bis 30 Minuten von Umgebungstemperatur – die unterhalb der Kristallitschmelztemperatur Polyolefins (a) liegt und insbesondere Raumtemperatur ist – auf die Kristallitschmelztemperatur des Polyolefins (a) bringt, unmittelbar darauf im Verlauf einer zweiten Unterstufe (I.2) auf eine Mischintensität übergeht, die 0,3 bis 0,8 mal so gross ist wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40°C darüber liegende Temperatur bringt und unmittelbar hiernach in einer zweiten Arbeitsstufe (II) innerhalb einer Zeitspanne von 0,5 bis 30 Sekunden den Mischerinhalt aus dem Mischer austrägt und innerhalb von 120 Sekunden auf eine Temperatur unterhalb der Kristallitschmelztemperatur des Polyolefins (a) bringt.

2. Verwendung kleinteiliger, mit faserförmigen Additiven versehener Polyolefin-Formmassen nach Anspruch 1 zur Herstellung von Formkörpern nach üblichen Spritzguss-Extrusions- und Hohlkörperblasverfahren.

### Claims

1. A process for the preparation of a particulate polyolefin molding material containing a fibrous additive, the molding material comprising

a) 100 parts by weight of a particulate, partially crystalline polyolefin, which has a mean particle diameter of from 10 to 5,000µm and an intrinsic viscosity [η], measured in decahydronaphthalene at 130°C, of from 0.5 to 15,

b) from 2 to 150 parts by weight of a fibrous additive, which has a mean particle diameter of from 0.001 to 200µm and a mean fiber length of from 5 to 2,000µm and has a softening point at least 50°C above the crystallite melting point of the polyolefin, with or without

c) from 0 to 5 parts by weight of a conventional silane-based or titanate-based adhesion promoter, and with or without

d) conventional amounts of other conventional additives or assistants,

wherein the component (a) and fibrous material, with or without the components (c) and/or (d), are mixed, in a first process step (I), in a mixer, with or without the supply or removal of caloric heat, the said step (I) comprising a first sub-step (I.1) in which the mixture is brought within a period of from 2 to 30 minutes from ambient temperature, which is below the crystallite melting point of the polyolefin (a) and in particular is room temperature, to the crystallite melting point of the polyolefin (a) whilst being subjected to a mixing intensity of from 100 to 600 W/liter of useful mixer capacity, which sup-step is followed immediately by a second sub-step (I.2) where the mixing intensity is brought to a value which is 0.3 to 0.8 times as great as the mixing intensity in the first sub-step (I.1) and the mixture is brought, within a period of from 0.1 to 20 minutes, from the crystallite melting point of the polyolefin (a) to a temperature which is from 3 to 40°C above the latter, and immediately thereafter, in a second process step (II), the material is discharged from the mixer within a period of from 0.5 to 30 seconds and is brought, within a period of 120 seconds, to a temperature below the crystallite melting point of the polyolefin (a).

2. Use of a particulate polyolefin molding material, containing fibrous additives, as claimed in claim 1, for the manufacture of moldings by conventional injection-molding, extrusion and blow-molding methods.

## Revendications

1. Procédé pour la préparation de matières à mouler polyoléfiniques en petites particules, chargées d'additifs fibreux, composées de: (a) 100 parties en poids d'une polyoléfine partiellement cristallisée, en petites particules, qui a un diamètre moyen de particules dans la gamme de 10 à 5000 microns et présente une viscosité limite $[\eta]$, mesurée dans la décaline à 130°C, dans la gamme de 0,5 à 15,
b) 2 à 150 parties en poids d'un additif fibreux qui a un diamètre moyen de particules de 0,001 à 200 microns, une longueur moyenne de fibres de 5 à 2000 microns et présente une température de ramollissement qui se situe au moins à 50°C au-dessus du point de fusion des cristallites de la polyoléfine,

c) le cas échéant, 0 à 5 parties en poids d'un agent de liaison usuel à base de silane ou de titanate, et
d) le cas échéant, des quantités habituelles d'autres matières de charge ou adjuvants usuels,
caractérisé en ce que, dans une première phase opératoire (I), on mélange dans un mélangeur – le cas échéant avec apport ou évacuation de chaleur calorique – le constituant (a) et la matière fibreuse, ainsi que – le cas échéant – les constituants (c) et/ou (d), en les portant, dans une première sous-phase (I.1), en un laps de temps de 2 à 30 minutes, de la température environnante – qui se situe au-dessous de la température de fusion des cristallites de la polyoléfine (a) et qui est en particulier la température de la pièce – à la température de fusion des cristallites de la polyoléfine (a), avec une intensité de malaxage se situant dans la gamme de 100 à 600 watts par litre de capacité utile et, immédiatement après, au cours d'une seconde sous-phase (I.2), en passant à une intensité de malaxage qui est de 0,3 à 0,8 fois l'intensité de malaxage appliquée dans la première sous-phase (I.1) et en portant le contenu du mélangeur, en un laps de temps de 0,1 à 20 minutes, de la température de fusion des cristallites de la polyoléfine (a) à une température se situant entre 3 et 40°C au-dessus, et en ce que, dans une seconde phase opératoire (II), on extrait du mélangeur le contenu de celui-ci en un laps de temps de 0,5 à 30 secondes et, en l'espace de 120 secondes, on l'amène à une température inférieure à la température de fusion des cristallites de la polyoléfine (a).

2. Utilisation de matières à mouler polyoléfiniques en petites particules, chargées d'additifs fibreux, selon la revendication 1 pour la fabrication de pièces moulées suivant des procédés usuels de moulage par injection, d'extrusion et de soufflage de corps creux.